# EUROPEAN PATENT APPLICATION

(11) **EP 3 973 771 A1**
(43) Date of publication of application: **30.03.2022**
(21) Application number: 20382859.5
(22) Date of filing: 29.09.2020
(51) Int. Cl.: A01K 61/73, A01K 61/70, E02B 3/04

(54) **ARTIFICIAL REEF**

(71) Applicant: Seastainable Ventures, S.L., 08980 Sant Feliu de Llobregat (ES)
(72) Inventor: Ferrer Pellicer, Ignasi, 08980 Sant Feliu de Llobregat (ES)
(74) Representative: Espiell Gomez, Ignacio

(57) **Abstract**

The present invention relates to an artificial reef which, made up of a set of elements that form a substrate (1) to favour the settlement of organisms and the development of underwater life, and which, preferably made up of modules (2), is fixed to at least one floating structure (3) which, being placed flush with the surface(s) or sunk below it, eventually enables it to be moved to change the location thereof, being able to be fixed between two floating structures (3) arranged in parallel and so that they enable vessels (5) to pass therethrough. The modules (2) are porous and eco-friendly concrete, with a metal frame (2a) connected to an electric current (7) or equipped with loT, to monitor the activity and parameters of the reef.

## Description

### OBJECT OF THE INVENTION

The invention, as stated in the title of the present specification, relates to an artificial reef which contributes, to its intended use, advantages and features, which are described in detail further on, which imply an improvement in the current state of the art.

The object of the present invention lies in an artificial reef which, preferably made up of modular elements of porous and eco-friendly concrete and calcium carbonate structures, which represent the most eco-friendly and effective solution for forming substrates that favour marine life and enable the size thereof to be varied as appropriate, is especially distinguished by the fact that it is fixed to a floating structure, which enables it to be moved to change its location, if appropriate, either due to weather conditions or for business convenience, it being designed as an amusement centre for diving and snorkelling. Moreover, it preferably has continuous monitoring means with loT (Internet of Things) digital interconnection communication.

### FIELD OF APPLICATION OF THE INVENTION

The field of application of the present invention is framed within the sector of marine structure construction, particularly encompassing the field of the manufacture and installation of elements for forming artificial reefs with special attention to the environment and sustainability.

### BACKGROUND OF THE INVENTION

As is known, protecting marine life and biodiversity and restoring the portion that has been destroyed or degraded by human activities is a primary focus on the global agenda (i.e., the European Green Deal and the European Strategy for Blue Growth) and the Blue Economy has become a worldwide social priority.

The sea is a vital source of life and benefits (i.e., fishing, tourism and coastal protection) for human beings, but anthropogenic pressures are threatening the ability of oceans to continue to provide resources and goods and services for ecosystems, particularly in coastal areas which are the most affected by human activities.

The effect of unsustainable activities has led to the destruction and significant reduction of our natural habitats that serve as food, shelter and protection for a multitude of marine animals and plants, including vital links in the food chain such as crustaceans, sponges and invertebrates. As natural habitats cannot rebuild themselves quickly enough to offset their rate of destruction, the fragile system of marine biodiversity is in jeopardy.

Although several protection efforts have been made, creating an increasing number of protected marine areas, it is now acknowledged that it is not enough to protect real biodiversity and humans must restore the marine life that has been destroyed due to anthropogenic pressures.

Currently, three of the greatest challenges to restoring marine biodiversity beyond protected marine areas are:
- creating artificial structures (such as, for example, reefs) that enable marine habitats to be restored and sheltered;
- improving knowledge about the marine environment to increase the effectiveness of restoration efforts;
- identifying sustainable uses and businesses with models that, enabling economic viability and eco-friendly sustainability, make it possible to use marine resources and further promote preservation efforts.

Currently, there are no global solutions to the problem on the market.

With regard to artificial reefs, in the last century and mainly in an attempt to reduce costs, several substrates have been used (for example, vessels and cars, tyres, trees, wooden frames, cracked stones, sandbags, scrap iron, drain pipes).

It has been shown that many of these substrates are not really effective, nor are they eco-friendly or environmentally sustainable, while iron and wood are less viable due to the rapid rate of degradation thereof, among other reasons. For this reason, eco-friendly concrete is the most relevant material used to date for building artificial reefs. There are a wide variety of models available on the market and each one of them can improve a specific purpose (for example, heavy reefs can prevent illegal trawling).

Even if the construction and deployment of eco-friendly concrete artificial reefs is a complex and expensive operation, to date there are very limited experiences of reefs specifically designed for optimising the reconstruction of marine life (thus including benthic habitats and not just fish communities, improving degraded or low-biodiversity areas) and that can also have a return on investment through exploitation by establishing business models that are both economically viable and environmentally sustainable.

Furthermore, even when multipurpose artificial reefs have been deployed, so far there are no cases of a holistic approach that, by rebuilding marine life, enables the sustainable use of the new structures.

As for water surfaces, there are several floating element technologies already available on the market for specific purposes (for example, marina docks, modular pontoons, oil and gas platforms), but to date there are no floating artificial reefs available as such (with inverted structures) to rebuild marine life and promote sustainable tourism activities.

However, marine life is always settling on or approaching these platforms, even if in an undesired and not biologically optimised way. For example, fishermen have been well aware of this for centuries and use various substrates (including palm leaves) to attract and catch fish. These structures have been banned in several countries and they are not even exploited for sustainable tourism activities (i.e., snorkelling or using transparent-bottom boats).

Last but not least, artificial reefs are structures that are not yet fully understood because to date they have never been monitored continuously. Biological parameters (i.e., fish and benthic aggregations) are generally monitored periodically (for example, monthly, bi-monthly or every two years) and environmental parameters are mainly monitored by means of seasonal measurements (i.e., with CTD (Conductivity, Temperature and Pressure) sensors and other water features). There are also limited cases in which monitoring has been done more often (for example, every few hours), but in that case the solution is expensive due to the need for specialised divers to install expensive sensors with a data logger on the seabed and then dive periodically, download the data and perform the necessary equipment maintenance.

The objective of the present invention is, therefore, to develop a new artificial reef model that improves what is currently known and provides practical solutions to the drawbacks described, as well as technical advantages for it, both given the type of material used and the shape and floating configuration thereof, and the incorporation of monitoring systems (sensors and Internet of Things).

Moreover, and as a reference to the current state of the art, it should be noted that although the existence of artificial reefs is already known as previously stated, at least the applicant is unaware of the existence of any other invention which presents technical, structural and constitutive features that are the same or similar to those presented by that which is claimed herein.

### DESCRIPTION OF THE INVENTION

The artificial reef proposed by the invention is configured as the ideal solution to the aforementioned objective, the characterising details that make it possible and that distinguish it being conveniently included in the final claims that accompany this description.

Specifically, what the invention proposes, as noted above, is an artificial reef which, preferably made up of modular elements of porous and eco-friendly concrete or with calcium carbonate structures, which enable the size and shape thereof to be varied as they are added, is essentially distinguished by the fact that the set formed by said modules is fixed to at least one floating structure, which can be on the surface or sunk a few metres below it, allowing the vessels to pass, which, in any case, provides the reef of the invention with the advantage of being able to be moved to change its location if appropriate, either due to weather conditions, i.e., if it is known that a storm is due with the possibility of causing damage thereto, or for seasonal business convenience, it being designed as an amusement centre for diving, snorkelling or for glass-bottom vessels to pass over it or beside it and see the marine life that develops on the reef.

Furthermore, in a preferred embodiment, the reef is intended to have continuous monitoring means with loT digital interconnection communication to be able to know the activity and parameters of interest of the reef.

Thus, the design of the reef has been optimised, combining digital technology and different construction methods, to improve the settlement of organisms in the structure of the reef itself.

Moreover, a scalable geometry has been designed, based on modular elements or modules able to be coupled together, wherein aggregation is possible in all directions and which has an optimal texture and shape for the settlement of various habitats of naturalistic interest.

The structure of some of said modules is further designed for the waterproof housing of electronic sensors for logging and communicating environmental data in real time which will be used for both scientific and commercial purposes (i.e., to decide where to dive, or to moor the boat).

Thus, the set of the aforementioned modules that make up the reef substrate is fixed under a floating platform, which can grow according to the needs of the users, generating modular circuits, and it can be designed both to improve the effectiveness of the visit by snorkelling and to travel with a small transparent-bottom boat.

Optionally, said modules can be incorporated fixed under respective floating platforms which, arranged in parallel with a certain distance between them, enabling the passage therethrough of at least one glass-bottom vessel, so that it shapes a kind of bilateral panorama that visitors will be able to observe on each side of it, thus generating routes of high naturalistic and touristic interest, maximising the profitability possibilities thereof.

In addition, one or more of the modules will be smart modules, thus using the substrates both for improving the settlement of marine life and for providing information to make a visit fun for the users.

The proposed artificial reef enables hard-bottom areas to be renaturalised (increasing the population of specific marine species such as algae, invertebrates, and fish), enabling a significant increase in biodiversity in degraded (or low-biodiversity) waters, and it carries specific sensors for the real-time monitoring of several environmental variables.

The reef is half submerged or fixed to the underside of a floating platform, which may be floating flush with the surface, in which case it is capable of incorporating various elements or devices therein, or floating sunken several metres below the surface, preferably those which allow tourist vessels to pass over them or beside them without any issues.

In any case, said floating platform or platforms on which the module-based substrate that makes up the very reef is fixed may be of a different nature, depending on the needs or preferences of each case, and, for example, consist of one or more floating concrete platforms, one or more expanded polystyrene billets or modular plastic pontoons.

Furthermore, the fixing of the reef modules to the flotation platform preferably comprises two portions: a vertical support that extends into the water and supports the modules, being made up, for example, of chains, rods or similar, and connection means between said vertical support and the floating platform, consisting, for example, of hinges, bolts, welds, etc.

The reef is therefore based on a modular system mainly made up of eco-friendly porous concrete modules and calcium carbonate structures, improving biological and eco-friendly processes. Moreover, the modular substrate that makes up the reef is efficiently and cost-effectively manufactured to create a new wild habitat for marine species, thus improving marine biodiversity.

For this, preferably, in the inner portion of the reef, if it is not biologically active, more economical modules are used, while in the outer biologically active portion, modules with a shape that imitates the natural substrate are used.

Optionally and furthermore, some of the modules, preferably on the outside of the set, instead of being made of eco-friendly concrete, are provided with electrified metal frames with electrolytic technology (of the Biorock-type) and a biomimetic design, which favour the growth of life in the reef by means of forming calcium carbonate structures.

In any case, said modules will have a high level of complexity (shape, roughness and holes), maximising the capacity for generating biodiversity, and their differential aggregation can make it possible to imitate different natural shapes (for example, caves and cracks in rocks) which enable a wide variety of benthic organisms to be housed.

Furthermore, as already mentioned above, the reef is preferably further equipped with specific loT modules, i.e., modules specially designed for housing sensors to continuously measure specific environmental data. These loT modules are accompanied by other independent devices (for example, video cameras or acoustic chambers) to provide more extensive information on the reef's performance in terms of biodiversity restoration and its impact on improving marine life. In addition and advantageously, they can have direct commercial exploitation since, by monitoring these parameters in real time, the client can choose, among other things, the best place for diving or snorkelling (for example, choosing the place where the transparency of the water or the presence of fish is greater) or where to moor the boat for preserving the habitats of the seabed and enjoying the views of marine biodiversity.

To do this, preferably, the loT module will have an autonomous component attached to specific modules by means of nesting in the module's geometry.

A data logger will also store the data locally and a communication unit will enable the data to be transferred to the communication station located on the surface, in the non-submerged portion of the platform. Communication between the submarine node and the surface may be possible by means of a submarine cable which connects more than one node to a buoy on the surface or by means of acoustic communication modules.

Thus, preferably, the loT module will have a waterproof and submersible casing, which houses several sensors and devices preferably consisting of the following:
- A sensor node, data logger and communication means. Said sensor node is an autonomous data communicator which interacts with a variety of sensors and logs data in real time. Communication can be established by means of a submarine cable or by means of an acoustic device.
- A turbidity sensor. The turbidity sensor detects the quality of the water by measuring the level of turbidity. It can detect particles suspended in water by measuring the transmittance of light and the dispersion rate that changes with the amount of total suspended solids (TSS) in the water. Additionally, the turbidity sensor can be used for measuring the quality of the water around the reef.
- A dissolved oxygen sensor. The dissolved oxygen sensor will be used for measuring the amount of dissolved oxygen in the water, per unit volume. The amount of oxygen that a given volume of water can contain is a function of the temperature of the water and its salinity. The concentration of dissolved oxygen (DO) in seawater is generally expressed in milligrams of oxygen per litre of water (mg / L).
- Productivity and seawater pH sensors. Other features of the seawater are mainly monitored by means of pH sensors and a fluorometer that will provide a measurement of the level of acids and bases and chlorophyll in the water.

Other loT applications can monitor the behaviour and movement patterns of fish around the reef. Depending on the specific needs, a number of independent devices can be connected to the loT module. Among these, for example, fish detection probes, underwater surveillance cameras and acoustic chambers can be placed for monitoring and logging the use of the reef by marine animals (i.e., fish, marine mammals, lobsters, etc.).

With all this, the uses and applications of the artificial reef of the invention are:
- The deployment thereof in the marine environment for rebuilding marine life and which can enable sustainable exploitation to be performed such as, for example, diving and controlled recreational fishing in adjacent areas.
- Fixed under a floating platform for rebuilding marine life and at the same time enabling sustainable tourist activities (i.e., snorkelling, environmental education and visits with a transparent-bottom boat).
- Including sensors for:
- Biological use for improving knowledge of marine environmental variables.
- Commercial use of the information provided. For example:
   - Smart choice of where to go diving according to the presence of fish, the transparency of the water, etc.;
   - Smart choice of where to moor the boat according to the environmental conditions, but also given the occupation of the space (for example, to avoid overcrowding).

### DESCRIPTION OF THE DRAWINGS

To complete the description provided herein, and for the purpose of helping to make the features of the invention more readily understandable, this description is accompanied by drawings constituting an integral part of the same, which by way of illustration and not limitation represent the following:
Figure 1 shows a schematic representation of an exemplary embodiment of the artificial reef object of the invention installed below the surface, specifically an example with a single floating platform sunken several metres below the surface and with several loT modules in the substrate that it forms, showing the main parts and elements that it comprises, as well as the configuration and arrangement thereof;
Figure 2 shows a schematic representation of another exemplary embodiment of the artificial reef, according to the invention, in this case with two floating platforms flush with the surface and separated to enable vessels to pass between the two portions of substrate that they define;
Figure 3 shows a schematic perspective view of an example of a porous and eco-friendly concrete module comprised by the reef for forming the substrate;
Figure 4 shows an arrangement example of the substrate modules for forming the reef, according to the invention;
Figure 5 shows a schematic representation of an example of an electrified metal module; and
Figure 6 shows a perspective view of an exemplary embodiment of an loT module, provided with a waterproof case for storing electronic components and sensors.

### PREFERRED EMBODIMENT OF THE INVENTION

In view of the aforementioned figures, and in accordance with the adopted numbering, one may observe therein non-limiting exemplary embodiments of the artificial reef of the invention, comprising what is described in detail below.

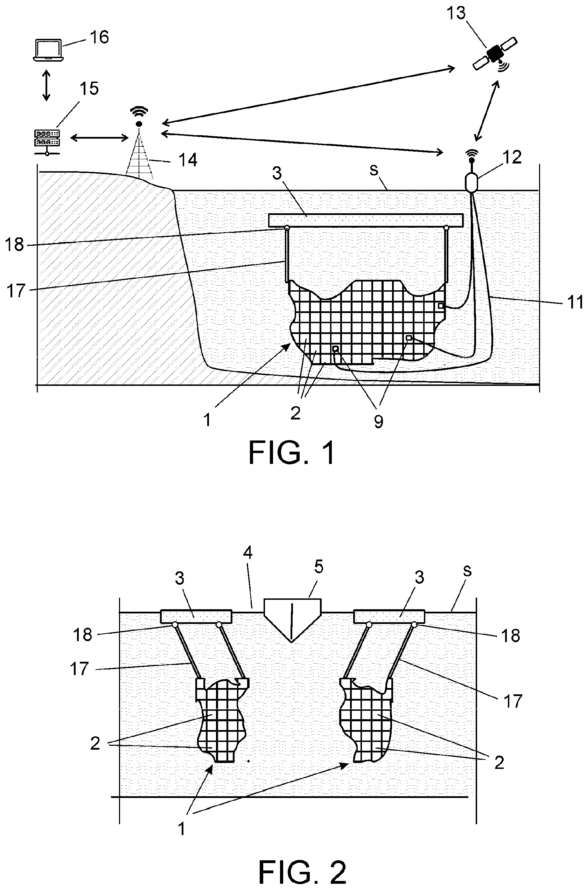

Thus, as can be seen in Figure 1, the artificial reef of the invention, made up of a set of elements which, as discussed below, are preferably annexable modules (2) that form a substrate (1) to favour the grip of organic matter and development of underwater life, is essentially distinguished in that it is installed fixed under at least one floating structure (3), thanks to which, if appropriate, said substrate can be moved and transferred through the water to change the location thereof.

Furthermore, in a preferred embodiment, as shown in the diagram in Figure 2, said substrate (1) of modules (2) is divided into two or more portions that are fixed under two or more floating structures (3) which are arranged so that they are separated from each other at a distance, thus defining a channel (4) that enables vessels (5) to pass therethrough, for example glass-bottom vessels, in order to facilitate the observation of life in the reef from both sides of the vessels.

It should be noted that, in both cases, the floating structure or structures (3) to which the substrate (1) of the reef is fixed may be designed either to be flush with the surface(s), as shown in the example of Figure 2, in which case, eventually, they can also be suitable for the installation of devices or other elements thereon, or, as shown in Figure 1, they can be designed to sink a few metres below the surface(s), so as not to hinder the maritime traffic of vessels.

Likewise, and depending on the needs of whether it is sunken or not, the location where the reef is installed, or the preferences of each case, said floating structure or structures (3) may be made up of solutions of a nature different than those that are already known on the market and, for example, they may be made up of one or more floating concrete platforms, one or more expanded polystyrene billets or modular plastic pontoons.

Preferably, the fixing of the modules (2) that make up the substrate (1) of the reef to the flotation platform (3) comprises two portions: a vertical support (17) that supports the modules, being made up, for example, of chains, rods or others, and connection means (18) between said vertical support (17) and the floating platform (3), consisting, for example, of hinges, bolts, welds, etc.

Moreover, as mentioned above, the substrate (1) that makes up the very reef is preferably made up of modules (2) that can be added or removed to vary the size and shape of the reef, as appropriate, which provides it with a scalable geometry wherein aggregation is possible in all directions.

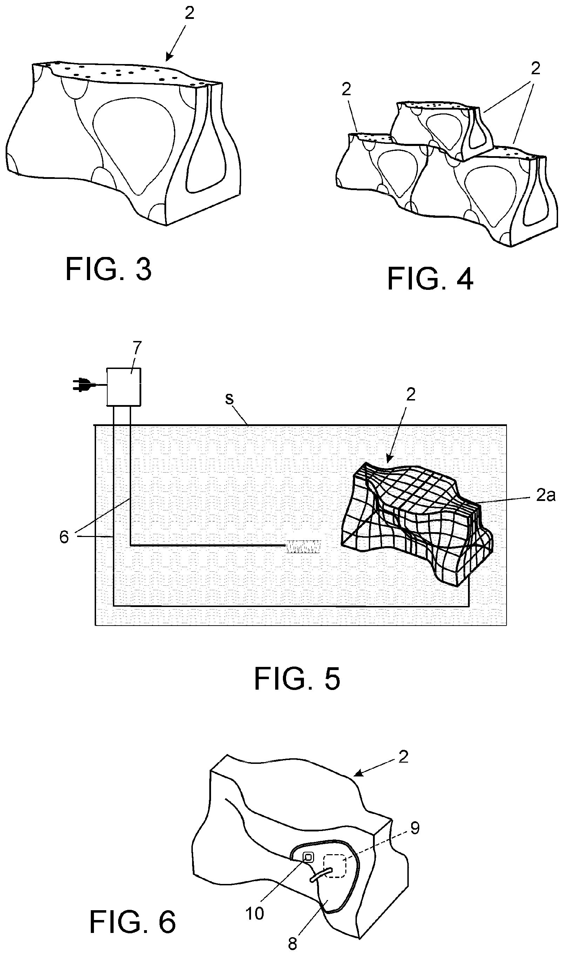

Furthermore, said modules (2) are preferably and for the most part porous eco-friendly concrete modules with irregular shapes and surfaces to simulate natural elements, as shown in the example of Figures 3 and 4. Preferably and in a way of imitating that is as natural as possible, with textures, roughness and holes allowing different natural shapes (such as caves and cracks in rocks) to be imitated.

Optionally and furthermore, said substrate (1) can also comprise one or more modules (2) provided with a metal frame having a biomimetic structure (2a) which, as shown in the diagram of Figure 5, is connected by means of the corresponding electric connection wiring (6) to an electric power source (7) so that an electric current can be induced which, as is known from Biorock-type electrolytic technology, favours the adherence of organisms, improving the formation of life in the reef.

Likewise, and also in a preferred but non-limiting manner, the substrate (1) made of modules (2) of the reef of the invention may comprise one or more modules (2) equipped with loT, i.e., provided with continuous monitoring means with loT digital interconnection communication, for which they are specifically designed for housing sensors to continuously measure specific environmental data and to monitor the activity and parameters of the reef.

For this, said loT modules (2), as shown in the schematic example of Figure 6, have a waterproof and submersible casing (8), inside of which different sensors and other devices are housed, among which the inclusion of a data logger sensor node and communication unit (9) is preferably envisaged, represented by means of a dashed line in said Figure 6, together with a turbidity sensor and/or a dissolved oxygen frequency sensor and/or a seawater productivity sensor (sensors that have not been represented in the figures). Furthermore, said loT modules (2) can further comprise underwater surveillance cameras and/or acoustic chambers (10).

In addition, for communication between the aforementioned data logger node and communication unit (9) and the exterior, the inclusion of a submarine communication cable (11) is envisaged which connects more than one node (9) to a buoy (12) located on the surface(s) and equipped with solar panels, battery power supply and microcontrollers to enable GPS communication with satellite (13) and/or communication towers (14) which, in turn, communicate with a server (15) that a user can access via Internet from a computer (16).

Having sufficiently described the nature of the present invention, as well as the ways of implementing it, it is not considered necessary to expand its explanation for any person skilled in the state of the art to understand its scope and the advantages which derive from it.

## Claims

1. An artificial reef which, made up of a set of elements that form a substrate (1) to favour the settlement of organisms and the development of underwater life, is **characterised in that** it is fixed to at least one floating structure (3) which, eventually, enables it to be moved to change the location thereof.

2. The artificial reef, according to claim 1, **characterised in that** it is fixed between two floating structures (3) arranged in parallel and so that they enable vessels (5) to pass therethrough.

3. The artificial reef, according to claim 1 or 2, **characterised in that** it is made up of modules (2) that can be added or removed to vary the size and shape of the reef, as appropriate.

4. The artificial reef, according to claim 3, **characterised in that** it comprises porous and eco-friendly concrete modules (2).

5. The artificial reef, according to claim 3 or 4, **characterised in that** it comprises one or more modules (2) with a metal frame (2a) connected to an electric current (7).

6. The artificial reef, according to claim 3 or 4, **characterised in that** it comprises one or more modules (2) equipped with loT, i.e., with continuous monitoring means with loT digital interconnection communication to monitor the activity and parameters of the reef.

7. The artificial reef, according to claim 6, **characterised in that** it comprises, in one or more of the loT modules (2), a data logger sensor node and communication unit (9).

8. The artificial reef, according to claim 7, **characterised in that** it comprises, in one or more of the loT modules (2), a turbidity sensor and/or a dissolved oxygen sensor and/or a seawater productivity sensor and/or underwater surveillance cameras and/or acoustic chambers (10).

9. The artificial reef, according to claim 7 or 8, **characterised in that** it comprises an acoustic communication module or a submarine cable (11) which connects more than one node (9) to one buoy (12) on the surface, equipped with solar panels, battery power supply and microcontrollers.

10. The artificial reef, according to any of claims 6 to 9, **characterised in that** it comprises a waterproof casing (8) for storing sensors and/or other electronic components.

11. The artificial reef, according to any of claims 1 to 10, **characterised in that** the floating structure or structures (3) to which the substrate (1) is fixed are flush with the surface(s) and enable devices or other elements to be installed on it.

12. The artificial reef, according to any of claims 1 to 10, **characterised in that** the floating structure or structures (3) to which the substrate (1) is fixed are below the surface(s), sunken several metres so as not to hinder the maritime traffic of vessels.

13. The artificial reef, according to any of the preceding claims, **characterised in that** the floating structure or structures (3) to which the substrate (1) is fixed are made up of one or more floating eco-friendly concrete platforms.

14. The artificial reef, according to any of claims 1 to 12, **characterised in that** the floating structure or structures (3) to which the substrate (1) is fixed are made up of one or more expanded polystyrene platforms.

15. The artificial reef, according to any of claims 1 to 12, **characterised in that** the floating structure or structures (3) to which the substrate (1) is fixed are made up of modular plastic pontoons.
